# EUROPÄISCHE PATENTSCHRIFT

(11) **EP 2 694 629 B1**
(45) Veröffentlichungstag und Bekanntmachung des Hinweises auf die Patenterteilung: **10.08.2016**
(21) Anmeldenummer: 12710463.6
(22) Anmeldetag: 09.03.2012
(51) Int. Cl.: C10L 5/44, C10L 9/08, F22B 1/16, F01K 3/18

(54) **DAMPFTURBINENANLAGE FÜR EIN THERMISCHES KRAFTWERK, SOWIE BETRIEBSVERFAHREN EINER DAMPFTURBINENANLAGE FÜR EIN THERMISCHES KRAFTWERK**
STEAM TURBINE SYSTEM FOR A THERMAL POWER PLANT, AND METHOD FOR THE OPERATION OF A STEAM TURBINE SYSTEM FOR A THERMAL POWER PLANT
INSTALLATION DE TURBINE À VAPEUR POUR CENTRALE THERMIQUE ET PROCÉDÉ DE FONCTIONNEMENT D'UNE INSTALLATION DE TURBINE À VAPEUR POUR CENTRALE THERMIQUE

(30) Priorität: 10.03.2011 DE 102011005346
(43) Veröffentlichungstag der Anmeldung: 12.02.2014
(73) Patentinhaber: Siemens Aktiengesellschaft, 80333 München (DE)
(72) Erfinder: HAJE, Detlef, 02828 Görlitz (DE); HERTWIG, Holger, 02708 Großschweidnitz (DE)
(86) Internationale Anmeldenummer: PCT/EP2012/054064
(87) Internationale Veröffentlichungsnummer: WO 2012/120104

(56) Entgegenhaltungen:
- WO-A1-2010/055189
- WO-A1-2010/112230
- DE-A1-102008 028 953

## Beschreibung

Die vorliegende Erfindung betrifft eine Dampfturbinenanlage nach dem Oberbegriff des Anspruchs 1 sowie ein Betriebsverfahren nach dem Oberbegriff des Anspruchs 10. Derartige Dampfturbinenanlagen und Betriebsverfahren hierfür sind aus dem Stand der Technik betreffend thermische Kraftwerke hinlänglich bekannt.

Bei einem thermischen Kraftwerk (auch "Wärmekraftwerk") wird thermische Energie aus einem Kraftwerkswärmebereitstellungsprozess zumindest teilweise in elektrische Energie umgewandelt. Bei dem Kraftwerkswärmebereitstellungsprozess kann es sich z. B. um einen Verbrennungsprozess (Kohlekraftwerk, Heizölkraftwerk, Müllheizkraftwerk etc.), einen Kernspaltungsprozess (Kernkraftwerk), eine solarthermische Aufheizung (Solarthermiekraftwerk) etc. handeln. Soweit die Energieumwandlung im Kraftwerk unter Einsatz einer Dampfturbinenanlage erfolgt, kann auch von einem "Dampfkraftwerk" gesprochen werden.

Bei einer Dampfturbinenanlage der hier interessierenden Art ist eine Dampfturbine zusammen mit einer Dampfbereitstellungseinrichtung in einem Wasser-Dampf-Kreislauf angeordnet. Die Dampfbereitstellungseinrichtung, welche im Stand der Technik typischerweise zumindest einen Kondensator, einen Vorwärmer und einen Dampferzeuger umfasst, wird mit thermischer Energie aus dem betreffenden Kraftwerkswärmebereitstellungsprozess versorgt, um aus dem Abdampf der Dampfturbine Frischdampf für die Dampfturbine zu erzeugen.

Es ist eine Aufgabe der vorliegenden Erfindung, eine Dampfturbinenanlage der eingangs genannten Art für ein thermisches Kraftwerk zu verbessern bzw. noch nutzbringender zu gestalten bzw. zu betreiben.

Diese Aufgabe wird gemäß der Erfindung durch eine Dampfturbinenanlage nach Anspruch 1 bzw. ein Verfahren zum Betrieb einer Dampfturbinenanlage nach Anspruch 10 gelöst. Die abhängigen Ansprüche betreffen vorteilhafte Ausgestaltungen der erfindungsgemäßen Dampfturbinenanlage, welche einzeln oder in beliebiger Kombination in entsprechender Weise auch als besondere Ausgestaltungen des erfindungsgemäßen Betriebsverfahrens vorgesehen werden können.

Die Grundidee der Erfindung besteht darin, den Prozess einer "hydrothermalen Karbonisierung" in den Wasser-Dampf-Kreislauf der Turbinenanlage bzw. eines die Dampfturbinenanlage aufweisenden thermischen Kraftwerkes zu integrieren.

Eine Integration von "hydrothermaler Karbonisierung" in ein Dampfkraftwerk zeigt beispielsweise das Dokument WO2010/112230 A1, welches den nächstliegenden Stand der Technik für die vorliegende Erfindung darstellt.

Die erfindungsgemäße Dampfturbinenanlage ist unter Anderem gekennzeichnet durch einen Reaktor mit einem Reaktionsraum zur hydrothermalen Karbonisierung von biologischen Reststoffen und Energieübertragungsmittel zur Übertragung von thermischer Energie aus dem Karbonisierungsprozess in den Wasser-Dampf-Kreislauf.

Der Prozess der hydrothermalen Karbonisierung an sich ist bekannt und wird versuchsweise bereits dazu eingesetzt, biologische Reststoffe (Küchenreststoffe, Grünabfälle etc.) zu Brennstoffen (Kohle etc.) umzusetzen. Zu diesem Zweck können die biologischen Reststoffe z. B. unter Luftabschluss auf einen erhöhten Druck von z. B. etwa 20 bar und eine erhöhte Temperatur z. B. im Bereich von 170°C bis 250°C gebracht werden. Unter diesen Bedingungen werden die betreffenden Reststoffe (Edukte) im Laufe einer Reaktionszeit von typischerweise einigen Minuten bis zu einigen Stunden zu wertvolleren Brennstoffen (Produkte) umgesetzt. Die Reaktion der hydrothermalen Karbonisierung ist eine exotherme Reaktion, deren Initiierung jedoch die Überwindung einer Reaktionsschwelle erfordert. Nach Initiierung des Karbonisierungsprozesses wird thermische Energie freigesetzt.

Bei der Erfindung wird die durch den Karbonisierungsprozess freigesetzte thermische Energie vorteilhaft genutzt. Der Einsatz der Erfindung vermag somit die von einem thermischen Kraftwerk abgegebene elektrische Leistung zu erhöhen. Zugleich können vorteilhaft biologische Reststoffe "beseitigt" bzw. in hochwertige Brennstoffe umgewandelt werden. Falls der betreffende Kraftwerkswärmebereitstellungsprozess ein Verbrennungsprozess ist oder einen solchen mitumfasst, also das betreffende Kraftwerk eine Verbrennungsanlage mit einem Brennraum zur Verbrennung von Brennstoffen aufweist, so lässt sich gemäß einer vorteilhaften Weiterbildung sogar vorsehen, dass die durch die Karbonisierung erzeugten Brennstoffe der Verbrennungsanlage zugeführt werden, beispielsweise zusätzlich zu einem konventionellen Brennstoff wie Kohle, Heizöl etc. Dies kann z. B. zumindest teilweise automatisiert erfolgen.

Für die Übertragung von thermischer Energie aus dem Karbonisierungsprozess in den Wasser-Dampf-Kreislauf gibt es vielfältige Möglichkeiten.

Erfindungsgemäß ist vorgesehen, dass die Energieübertragungsmittel an der Dampfbereitstellungseinrichtung wenigstens eine Abzweigung umfassen, die über eine Leitung mit einem zum Wärmeaustrag aus dem Reaktionsraum des Reaktors vorgesehenen Wärmetauscher verbunden ist, der über eine Rückleitung mit einer Einzweigung an anderer Stelle des Wasser-Dampf-Kreislaufes verbunden ist. In diesem Fall wird also ein Teil des im Bereich der Dampfbereitstellungseinrichtung strömenden Mediums, bei welchem es sich insbesondere um Kondensat oder Speisewasser handeln kann, aus dem Wasser-Dampf-Kreislauf entnommen und nach Erwärmung (mittels des Wärmetauschers) an anderer Stelle des Wasser-Dampf-Kreislaufes wieder zugeführt. Die bei der Karbonisierungsreaktion (exotherme Reaktion) entstehende Wärme kann durch diese Einkopplung in den Wasser-Dampf-Kreislauf verlustarm genutzt werden.

In einer Ausführungsform ist die Abzweigung zum Abzweigen von Wasser vorgesehen, welches durch Kondensation von Abdampf der Dampfturbine erzeugt wurde.

Eine herkömmliche Dampfbereitstellungseinrichtung umfasst in der Regel einen Kondensator zum Kondensieren des Abdampfes zu Wasser, bevorzugt wenigstens einen Vorwärmer zum Erwärmen des kondensierten Wassers (Kondensat), wenigstens eine Pumpe, und einen Dampferzeuger zum Erzeugen des Frischdampfes durch Verdampfung des Kondensats, wobei der Dampferzeuger mit der thermischen Energie aus dem betreffenden Kraftwerkswärmebereitstellungsprozess (z. B. Müllverbrennung, Kernspaltung, Solarthermie etc.) versorgt wird. Ein oder mehrere in der Dampfbereitstellungseinrichtung vorgesehene Vorwärmer umfassen in der Regel einen Wärmetauscher, der mit Dampf aus dem Expansionsverlauf der Dampfturbine versorgt wird, der an geeigneter Stelle entnommen wird. In einer spezielleren Ausführung sind in der Dampfbereitstellungseinrichtung nacheinander angeordnet: ein Kondensator, eine Kondensatpumpe, ein Kondensatvorwärmer, eine Speisewasserpumpe, ein Speisewasservorwärmer und ein Dampferzeuger. Bei dieser Ausgestaltung kann erfindungsgemäß ein gesteuertes Abzweigen eines Teils des Kondensats und/oder Speisewassers vor dem betreffenden Vorwärmer und ein Einzweigen des mittels des Wärmetauschers erwärmten Kondensats bzw. Speisewassers im Strömungsverlauf nach (z. B. unmittelbar nach) dem betreffenden Vorwärmer vorgesehen sein.

In diesem Fall ergibt sich also eine Ausführungsform, bei welcher die Einzweigung zum Einzweigen von Wasser im Bereich der Dampfbereitstellungseinrichtung vorgesehen ist, welches durch den Wärmetauscher erwärmt wurde.

Alternativ kann jedoch auch vorgesehen sein, dass der Wärmetauscher zur Erzeugung oder Erhitzung von Dampf vorgesehen ist, der über eine Dampfleitung als Frischdampf oder Zudampf der Dampfturbine zugeführt wird. Der Begriff "Zudampf" soll hier im Unterschied zu Frischdampf bedeuten, dass dieser Dampf in einem Strömungsbereich zwischen dem Dampfeinlass (für Frischdampf) und dem Dampfauslass (für Abdampf) der Dampfturbine zugeführt wird.

Der Reaktor kann einen den Reaktionsraum umschließenden Reaktorbehälter aufweisen, in welchem der Karbonisierungsprozess unter definierten (gesteuerten) Prozessbedingungen abläuft. Der Reaktordruck ist bevorzugt größer als 10 bar, beispielsweise etwa 20 bar. Die Reaktionstemperatur liegt beispielsweise im Bereich von 150°C bis 300°C, insbesondere im Bereich von 170°C bis 250°C.

In einer Ausführungsform ist vorgesehen, dass der Frischdampf mit einer Temperatur von mehr als 300°C am Dampfeinlass der Dampfturbine zugeführt wird und durch den erwähnten Wärmetauscher erzeugter bzw. erhitzter Dampf als Zudampf (Temperatur z. B. weniger als 250°C) der Dampfturbine zugeführt wird.

Die erfindungsgemäße Übertragung von thermischer Energie aus dem Karbonisierungsprozess kann also insbesondere einerseits durch eine Einbindung in die Kondensat- oder Speisewasservorwärmung oder andererseits durch die Erzeugung bzw. Erhitzung von Dampf für die Beaufschlagung der Dampfturbine mit Zudampf erfolgen. Alternativ oder zusätzlich zu einem Abzweigen von Medium aus dem Bereich der Dampfbereitstellungseinrichtung (bevorzugt mit einer Medientemperatur von weniger als 150°C, insbesondere weniger als 100°C) kommt auch ein Abzweigen von Dampf im Bereich der Dampfturbine (mit Hilfe einer Entnahme oder einer Abzapfung; bevorzugt mit einer Temperatur von weniger als 200°C, insbesondere weniger als 150°C) in Betracht, um mittels des erwähnten Wärmetauschers diesen Dampf zu erwärmen und als Zudampf an anderer Stelle im Expansionsverlauf der Dampfturbine wieder zuzuführen. Diese Maßnahme besitzt Ähnlichkeit mit der aus dem Stand der Technik von Dampfturbinen bekannten "Zwischenüberhitzung".

Erfindungsgemäß umfasst die Dampfturbinenanlage ferner weitere Energieübertragungsmittel zur Übertragung von thermischer Energie aus dem Wasser-Dampf-Kreislauf in den Reaktionsraum des Reaktors, um den Karbonisierungsprozess initiieren zu können.

Zu diesem Zweck können die weiteren Energieübertragungsmittel erfindungsgemäß an der Dampfturbine im Verlauf zwischen Dampfeinlass und Dampfauslass wenigstens eine Dampfabzweigung (Entnahme oder Abzweigung) umfassen, die über eine Dampfleitung mit dem Reaktor verbunden ist. Alternativ oder zusätzlich können die weiteren Energieübertragungsmittel am Wasser-Dampf-Kreislauf eine Frischdampfabzweigung umfassen, die über eine Dampfleitung mit dem Reaktor verbunden ist.

In beiden Fällen kann die betreffende Dampfleitung für eine "indirekte" Beheizung des Reaktionsraumes mit einem zum Wärmeeintrag in den Reaktionsraum des Reaktors vorgesehenen Wärmetauscher verbunden sein, wobei eine von diesem Wärmetauscher ausgehende Rückleitung an geeigneter anderer Stelle in den Wasser-Dampf-Kreislauf einzweigen kann.

Alternativ kommt eine "direkte" Beheizung des Reaktionsraumes in Betracht, bei welcher die betreffende Dampfleitung mit dem Reaktionsraum des Reaktors verbunden ist, so dass der Dampf direkt in diesen Reaktionsraum eingeleitet wird. Bei dieser Variante ist zweckmäßigerweise eine Ablassleitung am Reaktor vorzusehen, welche eine gesteuerte Abfuhr von Dampf aus dem Reaktionsraum heraus (z. B. in die Atmosphäre) gestattet.

Im Hinblick auf die zur Initiierung des Karbonisierungsprozess erforderliche Beheizung und Druckbeaufschlagung des Reaktionsraumes kann zusammenfassend also insbesondere Dampf aus dem Expansionsverlauf der Dampfturbine (mit Hilfe einer Entnahme oder einer Anzapfung; bevorzugt mit einer Dampftemperatur von mehr als 200°C, insbesondere mehr als 250°C) oder an anderer Stelle des Wasser-Dampf-Kreislaufes (z. B. als Frischdampf) entnommen werden, um den Karbonisierungsreaktor zu beheizen. Diese Beheizung kann direkt durch Beaufschlagung des Reaktorinnenraumes mit Druck und Temperatur des zugeführten Dampfes erfolgen. Alternativ oder zusätzlich kann eine indirekte Beheizung des Reaktionsraumes unter Zuhilfenahme eines hierfür vorgesehenen Wärmetauschers erfolgen, so dass der diesen Wärmetauscher durchströmende Dampf nicht in Kontakt mit dem Reaktorinventar (Biomasse etc.) des Reaktors kommt.

Der Karbonisierungsprozess kann beispielsweise diskontinuierlich ablaufen gelassen werden, z. B. in einem "Batch-Betrieb". Alternativ kann dieser Betrieb kontinuierlich erfolgen, etwa in einem "Durchlaufreaktor", welcher mehr oder weniger kontinuierlich mit dem zu karbonisierenden Material beschickt wird, wobei eine geeignet kontinuierliche Entnahme des karbonisierten Materials erfolgt.

Für die Option eines Batch-Betriebes können vorteilhaft z. B. mehrere Reaktoren in einer Weise parallel betrieben werden, bei welcher die Reaktoren abwechselnd beladen und betrieben werden, so dass ein "quasi-kontinuierlicher" Prozess geschaffen wird und dementsprechend quasi-kontinuierlich thermische Energie durch die Karbonisierung geliefert wird. Die Reaktoren können nach ihrer Beladung jeweils in oben bereits beschriebener Weise z. B. dampfbeheizt werden, um den betreffenden Karbonisierungsprozess zu initiieren. Im Verlauf der dann exotherm ablaufenden Reaktion entstehende Wärmeenergie kann in oben beschriebener Weise in den Wasser-Dampf-Kreislauf der Dampfturbinenanlage eingebracht und somit genutzt werden.

Für die Option des Durchlaufbetriebes kann das zu karbonisierende Material (z. B. Biomasse) z. B. durch eine Schleuseinrichtung quasi-kontinuierlich in das temperatur- und druckbeaufschlagte Reaktorinnere gebracht werden, wo es z. B. in oben bereits beschriebener Weise durch Dampf (direkt oder indirekt) erwärmt werden kann. Nach der Initiierung des Karbonisierungsprozesses kann die entstehende Wärme z. B. in oben bereits beschriebener Weise (durch Wasser oder Dampf) abgeleitet und dem Wasser-Dampf-Kreislauf der Dampfturbinenanlage zugeführt werden.

Vorteilhafterweise lässt sich die Karbonisierungsreaktion durch Einstellung der relevanten Reaktionsparameter, einschließlich Reaktionsdauer, so führen, dass ein hinsichtlich des Brennwertes und der Verbrennungseigenschaften (Reaktionsgeschwindigkeit, Aschegehalt, Erweichungspunkt der Asche etc.) günstiger Brennstoff erzeugt wird. Weiterhin kann die Endtemperatur der Karbonisierungsreaktion durch gesteuerte Wärmeabfuhr bzw. Wärmezufuhr so gewählt werden, dass sich nach Entnahme des Gutes aus dem Reaktor ein für eine Aufbereitung und Verbrennung günstiger Wassergehalt einstellt (z. B. Verdampfung von Überschuss-Wasser während der Abkühlung).

Optional erfolgt bei oder nach der Entnahme des Gutes aus dem Reaktor eine Aufbereitung für die Verbrennung. Hierbei kommen z. B. Zerkleinern, Pelletieren, Trocknen, Kompaktieren oder Klassieren oder Kombinationen hieraus in Frage.

In einer bevorzugten Ausführungsform ist ein thermisches Kraftwerk vorgesehen, welches eine Verbrennungsanlage mit einem Brennraum zur Verbrennung von Brennstoffen aufweist, wobei Mittel zum wenigstens teilweise automatisierten Transfer der durch den Karbonisierungsprozess erzeugten Brennstoffe in den Brennraum der Verbrennungsanlage vorgesehen sind, um in dieser Weise zusätzlichen Brennstoff für das (ansonsten mit einem herkömmlichen Brennstoff betriebene) Kraftwerk bereitzustellen.

In einer vorteilhaften Weiterbildung der Dampfturbinenanlage bzw. des damit ausgestatteten Kraftwerkes ist eine dem Karbonisierungsreaktor vorgeschaltete chemotechnische Einrichtung vorgesehen, um damit bestimmte Bestandteile aus den biologischen Reststoffen extrahieren zu können, bevor die biologischen Reststoffe dem Karbonisierungsreaktor zugeführt werden. Insbesondere kann die chemotechnische Einrichtung dazu ausgebildet sein, den biologischen Reststoffen durch Anwendung verschiedener chemischer Prozesse ("Bio-Raffinerie") besonders wertvolle Inhaltsstoffe zu entziehen.

Bei diesen Inhaltsstoffen kann es sich z. B. um solche handeln, die als Grundstoffe für die chemische Industrie tauglich sind (z. B. Amino- und Milchsäure), und die bisher hauptsächlich aus Erdöl gewonnen wurden.

Die Dampfturbinenanlage, der darin einbezogene Karbonisierungsreaktor und die gegebenenfalls vorgesehene chemotechnische Einrichtung können vorteilhaft z. B. innerhalb eines Kraftwerksgebäudes baulich zusammengefasst sein.

Zusammenfassend ist mit der Erfindung insbesondere ein Konzept für die großtechnische Nutzung der hydrothermalen Karbonisierung aufgezeigt, welches die Wärmebereitstellung und - nutzung in einer besonders geeigneten Weise vorsieht. Durch die Einbindung eines Prozesses der hydrothermalen Karbonisierung in einen Wasser-Dampf-Kreislauf einer Dampfturbinenanlage eines thermischen Kraftwerkes wird auf eine kontinuierlich arbeitende Wärmequelle zurückgegriffen, um einen Dampferzeuger der Dampfbereitstellungseinrichtung zu versorgen. Ein zur Initiierung des Karbonisierungsprozesses geeignetes Heizmedium (Dampf) kann an geeigneter Stelle, d. h. beispielsweise auf dem erforderlichen Temperatur- und Druckniveau entnommen werden. Die bei der sodann exotherm ablaufenden Karbonisierungsreaktion entstehende thermische Energie kann durch Einspeisung in den Wasser-Dampf-Kreislauf verlustarm genutzt werden. Weiterhin kann auf diese Weise gegebenenfalls ein Teil des für den Betrieb des Kraftwerkes erforderlichen Brennstoffes aus an sich zunächst "niederwertiger" Biomasse oder dergleichen erzeugt werden.

Die Erfindung wird nachfolgend anhand von Ausführungsbeispielen mit Bezug auf die beigefügten Zeichnungen weiter beschrieben. Es stellen dar:
- Fig. 1: ein schematisches Blockdiagramm einer herkömmlichen Dampfturbinenanlage, und
- Fig. 2: ein schematisches Blockdiagramm einer Dampfturbinenanlage gemäß eines Ausführungsbeispiels der Erfindung.

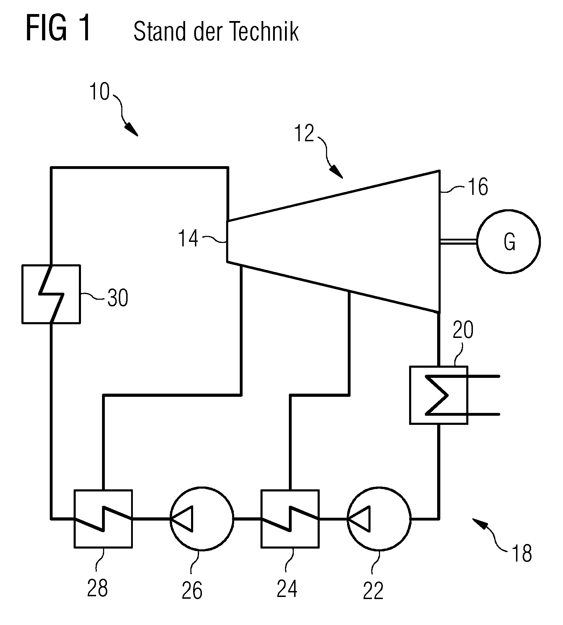

Fig. 1 zeigt eine herkömmliche Dampfturbinenanlage 10 für ein thermisches Kraftwerk, bei welchem also durch einen "Kraftwerkswärmebereitstellungsprozess" in irgendeiner Art thermische Energie erzeugt wird, und diese Energie durch die Dampfturbinenanlage 10 in elektrische Energie umgesetzt wird.

Die Dampfturbinenanlage 10 umfasst eine Dampfturbine 12 mit einem Dampfeinlass 14 für Frischdampf und einem Dampfauslass 16 für Abdampf. Der Abdampf entsteht durch eine druck- und temperaturreduzierende Expansion des zugeführten Dampfes im Verlauf der Turbinendurchströmung.

Der Frischdampf wird mit relativ hohem Druck (z. B. mehr als 100 bar) und relativ hoher Temperatur (z. B. mehr als 400°C) am Dampfeinlass 14 zugeführt. Der am Dampfauslass 16 austretende Abdampf besitzt einen Druck von z. B. weniger als 1 bar (also Unterdruck) und eine Temperatur von z. B. weniger als 50°C.

Eine Dampfbereitstellungseinrichtung 18 ist eingangsseitig mit dem Dampfauslass 16 der Dampfturbine 12 und ausgangsseitig mit dem Dampfeinlass 14 der Dampfturbine 12 verbunden, so dass die Dampfturbine zusammen mit der Dampfbereitstellungseinrichtung einen "Wasser-Dampf-Kreislauf" ausbildet.

Mittels der Dampfturbine 12 wird Energie des Dampfes in mechanische Drehleistung zum Antrieb eines Turbinenläufers umgesetzt, um einen mit einem Turbinenläufer gekoppelten elektrischen Generator G anzutreiben.

Die Dampfbereitstellungseinrichtung 18 dient dazu, einerseits den kontinuierlichen Betrieb der Dampfturbine 12 durch Rückführung des Arbeitsmediums zu bewerkstelligen und andererseits die Energie des Arbeitsmediums zu erhöhen. Zu diesem Zweck umfasst die Dampfbereitstellungseinrichtung 18 im dargestellten Ausführungsbeispiel im Strömungsverlauf nacheinander angeordnet einen Kondensator 20, eine Kondensatpumpe 22 einen Kondensatvorwärmer 24, eine Speisewasserpumpe 26, einen Speisewasservorwärmer 28 und einen Dampferzeuger 30.

Die Übertragung von thermischer Energie aus dem betreffenden Kraftwerkswärmebereitstellungsprozess in die Dampfbereitstellungseinrichtung 18 erfolgt in erster Linie im Dampferzeuger 30. Darüber hinaus kann diese Energie auch zur Versorgung des Vorwärmers 24 und/oder des Vorwärmers 28 verwendet werden. Im dargestellten Ausführungsbeispiel ist eine weitere Möglichkeit zur Versorgung der Vorwärmer 24 und 28 symbolisiert, nämlich deren Versorgung durch Dampf aus dem Expansionsverlauf der Dampfturbine 12. Der in dieser Weise zu den Vorwärmern 24 und 28 zwecks Erwärmung des Kondensats bzw. des Speisewassers geleitete Dampf kann dann an geeigneter Stelle im Wasser-Dampf-Kreislauf wieder eingezweigt werden (bevorzugt in Form von Wasser).

Bei der nachfolgenden Beschreibung eines erfindungsgemäßen Ausführungsbeispiels werden für gleichwirkende Komponenten die gleichen Bezugszahlen verwendet, jeweils ergänzt durch einen kleinen Buchstaben "a" zur Unterscheidung der Ausführungsform. Dabei wird im Wesentlichen nur auf die Unterschiede zu dem bereits anhand der Fig. 1 beschriebenen Ausführungsbeispiel eingegangen und im Übrigen hiermit ausdrücklich auf die Beschreibung dieses vorangegangenen Beispiels verwiesen.

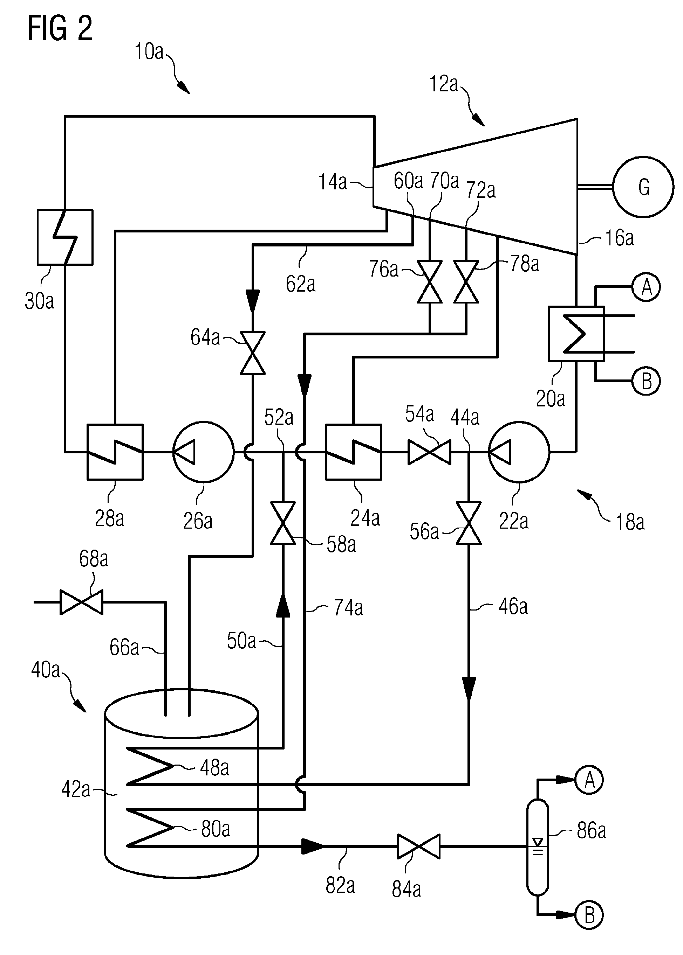

Fig. 2 zeigt eine Dampfturbinenanlage 10a, welche sämtliche der zuvor bereits beschriebenen Anlagenkomponenten (der herkömmlichen Dampfturbinenanlage 10) aufweist.

Darüber hinaus umfasst die Dampfturbinenanlage 10a einen Reaktor 40a mit einem Reaktionsraum 42a zur hydrothermalen Karbonisierung von biologischen Reststoffen (z. B. "Biomasse"), welche zu diesem Zweck geeigneten Reaktionsbedingungen ausgesetzt werden. Der Druck und die Temperatur im Reaktionsraum 42a können beispielsweise auf Werte von etwa 20 bar und etwa 200°C eingestellt werden.

Außerdem umfasst die Dampfturbinenanlage 10a nachfolgend detaillierter beschriebene Energieübertragungsmittel zur Übertragung von thermischer Energie aus dem im Reaktor 40a stattfindenden Karbonisierungsprozess in einen von einer Dampfturbine 12a und einer Dampfbereitstellungseinrichtung 18a gebildeten Wasser-Dampf-Kreislauf.

Im dargestellten Beispiel umfassen die Energieübertragungsmittel entsprechend der Erfindung eine Abzweigung 44a an der Dampfbereitstellungseinrichtung 18a, die über eine Leitung 46a mit einem ersten Wärmetauscher 48a verbunden ist, der wiederum über eine Rückleitung 50a mit einer Einzweigung 52a an anderer Stelle des Wasser-Dampf-Kreislaufes verbunden ist.

Die Abzweigung 44a ist im dargestellten Beispiel im Strömungsverlauf zwischen einer ersten Pumpe 22a und einem ersten Vorwärmer 24a angeordnet. Im dargestellten Beispiel wird somit Wasser (Kondensat) aus der Dampfbereitstellungseinrichtung 18a teilweise abgezweigt und mittels des zum Wärmeaustrag aus dem Reaktionsraum 42a innerhalb dieses Reaktionsraumes angeordneten ersten Wärmetauschers 48a erwärmt und im erwärmten, jedoch ebenfalls flüssigen Zustand wieder in den Kreislauf zurückgespeist. Die hierfür verwendete Einzweigung 52a ist im dargestellten Beispiel im Strömungsverlauf zwischen dem ersten Vorwärmer 24a und einem zweiten Vorwärmer 28a angeordnet.

Hinter der Abzweigung 44a (im Strömungsverlauf der Dampfbereitstellungseinrichtung 18a), und auch im Verlauf der Leitungen 46a und 50a ist jeweils ein Steuerventil 54a, 56a bzw.

58a angeordnet. Durch geeignete Ansteuerung dieser Steuerventile kann somit vorteilhaft ein gewünschter Anteil des Kondensats aus dem Kreislauf abgezweigt und dem ersten Wärmetauscher 48a zugeführt (und erwärmt in den Kreislauf zurückgespeist) werden. Damit kann auch vorteilhaft eine Steuerung bzw. Einstellung des Karbonisierungsprozesses hinsichtlich der im Reaktionsraum 42a herrschenden Temperatur bewerkstelligt werden. Je mehr thermische Energie aus dem Karbonisierungsprozess in den Kreislauf übertragen wird, desto größer ist die "Kühlwirkung" für den Karbonisierungsprozess, und umgekehrt.

An dieser Stelle ist anzumerken, dass abweichend vom dargestellten Beispiel der erste Wärmetauscher 48a (oder ein zusätzlicher Wärmetauscher im Reaktionsraum 42a) auch zur Erzeugung von Dampf aus dem zugeführten Wasser vorgesehen werden könnte, um über die betreffende Rückleitung Frischdampf oder so genannten Zudampf zur Dampfturbine 12a zuzuleiten.

Des Weiteren könnte abweichend vom dargestellten Beispiel auch vorgesehen sein, nicht Wasser (z. B. Kondensat und/oder Speisewasser) aus dem Kreislauf abzuzweigen, sondern (alternativ oder zusätzlich) Dampf aus dem Kreislauf, insbesondere aus dem Bereich der Dampfturbine 12a abzuzweigen, z. B. aus einem Bereich mittleren Druckes (z. B. 40 bis 10 bar) und/oder aus einem Bereich niedrigen Druckes (z. B. 10 bis 3 bar), mittels des Wärmetauschers zu erwärmen und an geeigneter Stelle im Kreislauf zurückzuspeisen (insbesondere z. B. als Zudampf in die Dampfturbine 12a).

Durch die beschriebenen oder funktionsgleiche andere Energieübertragungsmittel können somit biologische Reststoffe vorteilhaft als "zusätzliche energetische Versorgung" der Dampfbereitstellungseinrichtung 18a genutzt werden und hierbei zugleich zu wertvollen Brennstoffen umgesetzt werden. Diese so erzeugten Brennstoffe können gegebenenfalls sogleich einer Verbrennung innerhalb des betreffenden Kraftwerkes zugeführt werden.

Was die Initiierung des im Reaktionsraum 42a stattfindenden Karbonisierungsprozesses anbelangt, so gibt es vielfältige Möglichkeiten. In Fig. 2 sind zwei besonders vorteilhafte Möglichkeiten dargestellt, die einzeln oder in Kombination eingesetzt werden können.

Bei beiden Möglichkeiten wird Dampf aus dem Expansionsverlauf der Dampfturbine 12a entnommen, um den Karbonisierungsreaktor 40a zu beheizen.

Eine erste, "direkte" Beheizung erfolgt mittels einer Dampfabzweigung 60a, die über eine Dampfleitung 62a, in deren Verlauf ein Steuerventil 64a angeordnet ist, mit dem Reaktor 40a verbunden ist und in den Reaktionsraum 42a einmündet. Um den damit eingeleiteten Dampf wieder aus dem Reaktor 40a abführen zu können, ist eine aus dem Reaktionsraum 42a herausführende Ablassleitung 66a vorgesehen, in deren Verlauf ein Steuerventil 68a angeordnet ist.

Die Initiierung des Karbonisierungsprozesses kann demnach dadurch bewerkstelligt werden, dass die Steuerventile 64a und 68a eine gewisse Zeit lang so angesteuert werden, dass Dampf über die Leitung 62a in den Reaktor 40a gelangt und falls erforderlich teilweise über die Ablassleitung 66a wieder abgelassen wird, um zur Initiierung des Karbonisierungsprozesses geeignete Bedingungen im Reaktionsraum 42a zu schaffen. Sehr vorteilhaft kann durch geeignete Ansteuerung der Steuerventile 64a und 68a sowohl eine Temperatur- als auch eine Druckeinstellung zwecks Initiierung der Karbonisierungsreaktion erfolgen.

Ein weiterer Vorteil dieser "direkten" und steuerbaren Beheizungsmöglichkeit besteht darin, dass damit auch während des späteren Karbonisierungsprozesses der Druck und/oder die Temperatur im Reaktionsraum 42a gesteuert werden kann.

Beispielsweise kann ein Öffnen des Ventils 68a zwecks Verringerung von Druck und Temperatur im Reaktionsraum 42a erfolgen, wohingegen ein Öffnen des Ventils 64a zur Erhöhung des Druckes (und in der Regel auch der Temperatur) eingesetzt werden kann.

Eine derartige Dampfzufuhr bzw. Dampfabfuhr wirkt je nach Auslegung und Betriebszustand der Anlage mehr oder weniger gleichermaßen auf Druck und Temperatur im Reaktionsraum. Um durch gesteuerte Dampfzufuhr und -abfuhr eine Steuerung des Druckes und unabhängig davon eine Steuerung der Temperatur des Karbonisierungsprozesses besser bewerkstelligen zu können, könnte abweichend vom dargestellten Ausführungsbeispiel auch mehr als ein steuerbarer Dampfzufuhrpfad vorgesehen sein (z. B. zwei mit einem jeweiligen Ventil versehene Zufuhrleitungen zur Zufuhr von Dampf mit unterschiedlichem Druck und/oder unterschiedlicher Temperatur).

Für eine steuerbare "indirekte" Beheizung des Karbonisierungsreaktors 40a sind zwei Abzweigungen 70a und 72a an der Dampfturbine 12a vorgesehen, die über eine Dampfleitung 74a mit dem Reaktor 40a verbunden sind. Im dargestellten Beispiel ist die Dampfleitung 74a als gemeinsame Dampfleitung für beide Abzweigungen 70a und 72a vorgesehen, welche hierfür über jeweils ein Steuerventil 76a bzw. 78a in die Dampfleitung 74a einmünden. Diese Gestaltung mit mehreren Abzweigungen an verschiedenen Stellen im Expansionsverlauf der Dampfturbine 12a, und entsprechenden Steuerventilen, besitzt den Vorteil, dass verschieden konditionierter Dampf in die Dampfleitung 74a eingespeist werden kann, je nach Ansteuerung der betreffenden Steuerventile (hier: Steuerventile 76a und 78a). Die Dampfleitung 74a ist mit einem zweiten Wärmetauscher 80a im Reaktorinneren verbunden, welcher (anders als der erste Wärmetauscher 48a) zum Wärmeeintrag in den Reaktionsraum 42a des Reaktors 40a vorgesehen ist.

Der zweite Wärmetauscher 80a ist im dargestellten Beispiel über eine Dampfleitung 82a, in deren Verlauf ein Steuerventil 84a angeordnet ist, mit dem Eingang eines Wasserabscheiders 86a verbunden. Diesbezüglich ist anzumerken, dass diese indirekte Beheizung gemäß des dargestellten Beispiels so ausgelegt ist, dass die vom Wärmetauscher 80a abgehende Leitung 82a Nassdampf führt, d. h. Dampf mit einem gewissen Anteil an (auskondensiertem) Wasser. Der nachgeschaltete Wasserabscheider 86a dient dazu, die Dampf- und Wasseranteile voneinander zu trennen und an verschiedenen Stellen in den Kreislauf zurückzuspeisen.

Im dargestellten Ausführungsbeispiel wird der Dampfanteil an einem zusätzlichen Eingang eines Kondensators 20a (zusammen mit dem Abdampf der Dampfturbine 12a) eingespeist. Der Wasseranteil wird im dargestellten Beispiel am Kondensatausgang des Kondensators 20a eingespeist. Es versteht sich, dass abweichend von diesem konkreten Beispiel der Dampfanteil und/oder der Wasseranteil auch an anderen geeigneten Stellen in den Kreislauf zurückgespeist zugeführt werden könnten.

Ebenfalls abweichend vom dargestellten Beispiel könnte über die Dampfleitung 82a anstatt Nassdampf auch trocken gesättigter Dampf oder Heißdampf geführt werden. In diesem Fall wäre dann ein nachgeschalteter Wasserabscheider entbehrlich und der durch den Wärmetauscher gelieferte Trocken- bzw. Heißdampf könnte an einer Stelle des Wasser-Dampf-Kreislaufes zurückgespeist werden.

In einer interessanten Weiterbildung des mit der Dampfturbinenanlage 10a realisierten Betriebsverfahren ist vorgesehen, dass die biologischen Reststoffe zunächst einer chemotechnischen Vorbehandlung unterzogen werden, bevor diese der Karbonisierung im Reaktor 40a zugeführt werden. Eine hierfür geeignete chemotechnische Einrichtung kann z. B. zusammen mit dem Reaktor 40a in das betreffende Kraftwerk integriert werden. Vorteilhaft können mittels der chemotechnischen Einrichtung (z. B. "Bio-Raffinerie") insbesondere besonders wertvolle Inhaltsstoffe extrahiert und einer anderen nutzbringenden Verwertung zugeführt werden, wohingegen die verbleibenden Inhaltsstoffe dem Karbonisierungsprozess zugeführt werden.

## Patentansprüche

1. Dampfturbinenanlage für ein thermisches Kraftwerk, mit
- einer Dampfturbine (12a) mit einem Dampfeinlass (14a) für Frischdampf und einem Dampfauslass (16a) für Abdampf, zur Umwandlung von Energie des Dampfes in mechanische Drehleistung, und
- einer zusammen mit der Dampfturbine (12a) in einem Wasser-Dampf-Kreislauf angeordneten und einerseits mit dem Dampfauslass (16a) der Dampfturbine (12a) und andererseits mit dem Dampfeinlass (14a) der Dampfturbine (12a) verbundenen Dampfbereitstellungseinrichtung (20a, 22a, 24a, 26a, 28a, 30a), die mit thermischer Energie aus einem Kraftwerkswärmebereitstellungsprozess versorgbar ist, um aus dem Abdampf der Dampfturbine (12a) Frischdampf für die Dampfturbine (12a) zu erzeugen,
wobei die Dampfturbinenanlage des Weiteren enthält:
- einen Reaktor (40a) mit einem Reaktionsraum (42a) zur hydrothermalen Karbonisierung von biologischen Reststoffen,
- Energieübertragungsmittel (44a, 46a, 48a, 50a, 52a) zur Übertragung von thermischer Energie aus dem Karbonisierungsprozess in den Wasser-Dampf-Kreislauf, wobei die Energieübertragungsmittel (44a, 46a, 48a, 50a, 52a) an der Dampfbereitstellungseinrichtung (20a, 22a, 24a, 26a, 28a, 30a) wenigstens eine Abzweigung (44a) umfassen, die über eine Leitung (46a) mit einem zum Wärmeaustrag aus dem Reaktionsraum (42a) des Reaktors (40a) vorgesehenen Wärmetauscher (48a) verbunden ist, der über eine Rückleitung (50a) mit einer Einzweigung (52a) an anderer Stelle des Wasser-Dampf-Kreislaufes verbunden ist, und
- weitere Energieübertragungsmittel (60a, 62a, 66a; 70a, 72a, 74a, 80a, 82a) zur Übertragung von thermischer Energie aus dem Wasser-Dampf-Kreislauf in den Reaktionsraum (42a) des Reaktors (40a), um den Karbonisierungsprozess zu initiieren, wobei die weiteren Energieübertragungsmittel (60a, 62a, 66a; 70a, 72a, 74a, 80a, 82a) an der Dampfturbine (12a) im Verlauf zwischen Dampfeinlass (14a) und Dampfauslass (16a) wenigstens eine Dampfabzweigung (60a; 70a, 72a) und/oder am Wasser-Dampf-Kreislauf eine Frischdampfabzweigung umfassen, die über eine Dampfleitung (62a; 74a) mit dem Reaktor (40a) verbunden ist.

2. Dampfturbinenanlage nach Anspruch 1, wobei die Abzweigung (44a) der Energieübertragungsmittel (44a, 46a, 48a, 50a, 52a) zum Abzweigen von Wasser vorgesehen ist, welches durch Kondensation von Abdampf der Dampfturbine (12a) erzeugt wurde.

3. Dampfturbinenanlage nach Anspruch 1 oder 2, wobei die Einzweigung (52a) zum Einzweigen von Wasser im Bereich der Dampfbereitstellungseinrichtung (20a, 22a, 24a, 26a, 28a, 30a) vorgesehen ist, welches durch den Wärmetauscher (48a) erwärmt wurde.

4. Dampfturbinenanlage nach Anspruch 1 oder 2, wobei der Wärmetauscher (48a) zur Erzeugung oder Erhitzung von Dampf vorgesehen ist, der über die Rückleitung (50a) als Frischdampf oder Zudampf der Dampfturbine (12a) zugeführt wird.

5. Dampfturbinenanlage nach einem der vorangehenden Ansprüche, wobei die weiteren Energieübertragungsmittel (60a, 62a, 66a; 70a, 72a, 74a, 80a, 82a) am Wasser-Dampf-Kreislauf eine Frischdampfabzweigung umfassen, die über eine Dampfleitung mit dem Reaktor (40a) verbunden ist.

6. Dampfturbinenanlage nach einem der vorangehenden Ansprüche, wobei eine Dampfleitung (62a; 74a) bzw. Frischdampfleitung der weiteren Energieübertragungsmittel (60a, 62a, 66a; 70a, 72a, 74a, 80a, 82a) für eine indirekte Beheizung des Reaktionsraumes (42a) mit einem zum Wärmeintrag in den Reaktionsraum (42a) des Reaktors (40a) vorgesehenen weiteren Wärmetauscher (80a) verbunden ist.

7. Dampfturbinenanlage nach einem der vorangehenden Ansprüche, wobei eine Dampfleitung (62a; 74a) bzw. Frischdampfleitung der weiteren Energieübertragungsmittel (60a, 62a, 66a; 70a, 72a, 74a, 80a, 82a) für eine direkte Beheizung des Reaktionsraumes (42a) mit dem Reaktionsraum (42a) des Reaktors (40a) verbunden ist.

8. Dampfturbinenanlage nach Anspruch 7, wobei am Reaktor (40a) eine Ablassleitung (66a) vorgesehen ist, welche eine gesteuerte Abfuhr von Dampf aus dem Reaktionsraum (42a) heraus, insbesondere in die Atmosphäre, gestattet.

9. Dampfturbinenanlage nach einem der vorangehenden Ansprüche, ferner umfassend eine dem Karbonisierungsreaktor (40a) vorgeschaltete chemotechnische Einrichtung zur Extraktion bestimmter Bestandteile aus den biologischen Reststoffen, bevor die biologischen Reststoffe dem Karbonisierungsreaktor (40a) zugeführt werden.

10. Verfahren zum Betrieb einer Dampfturbinenanlage (10a) für ein thermisches Kraftwerk, bei welchem
- mittels einer Dampfturbine (12a) mit einem Dampfeinlass (14a) für Frischdampf und einem Dampfauslass (16a) für Abdampf Energie des Dampfes in mechanische Drehleistung umgewandelt wird, und
- mittels einer zusammen mit der Dampfturbine (12a) in einem Wasser-Dampf-Kreislauf angeordneten und einerseits mit dem Dampfauslass (16a) der Dampfturbine (12a) und andererseits mit dem Dampfeinlass (14a) der Dampfturbine (12a) verbundenen Dampfbereitstellungseinrichtung (20a, 22a, 24a, 26a, 28a, 30a), die mit thermischer Energie aus einem Kraftwerkswärmebereitstellungsprozess versorgbar ist, aus dem Abdampf der Dampfturbine (12a) Frischdampf für die Dampfturbine (12a) erzeugt wird,
wobei in einem Reaktionsraum (42a) eines Reaktors (40a) eine hydrothermale Karbonisierung von biologischen Reststoffen durchgeführt wird und thermische Energie aus dem Karbonisierungsprozess in den Wasser-Dampf-Kreislauf übertragen wird, wobei die Energieübertragung mittels einer an der Dampfbereitstellungseinrichtung (20a, 22a, 24a, 26a, 28a, 30a) vorgesehenen Abzweigung von Wasser oder Dampf und Leitung des Wassers bzw. Dampfes zu einem zum Wärmeaustrag aus dem Reaktionsraum (42a) des Reaktors (40a) vorgesehenen Wärmetauscher (48a) erfolgt, der über eine Rückleitung (50a) mit einer Einzweigung (52a) an anderer Stelle des Wasser-Dampf-Kreislaufes verbunden ist, und wobei ferner eine weitere Übertragung von thermischer Energie aus dem Wasser-Dampf-Kreislauf in den Reaktionsraum (42a) des Reaktors (40a) erfolgt, um den Karbonisierungsprozess zu initiieren, wobei die weitere Energieübertragung mittels einer an der Dampfturbine (12a) im Verlauf zwischen Dampfeinlass (14a) und Dampfauslass (16a) vorgesehenen Abzweigung von Dampf und/oder Abzweigung von Frischdampf am Wasser-Dampf-Kreislauf, und Leitung des abgezweigten Dampfes bzw. Frischdampfes zu dem Reaktor, erfolgt.

11. Verfahren nach Anspruch 10, bei welchem den biologischen Reststoffen bestimmte Bestandteile entzogen werden, bevor die biologischen Reststoffe der Karbonisierung unterzogen werden.

## Claims

1. Steam turbine system for a thermal power plant, comprising
- a steam turbine (12a) with a steam inlet (14a) for live steam and a steam outlet (16a) for exhaust steam, for converting energy from the steam into mechanical rotary power, and
- a steam providing device (20a, 22a, 24a, 26a, 28a, 30a), which is arranged together with the steam turbine (12a) in a water-steam circuit, is connected on the one hand to the steam outlet (16a) of the steam turbine (12a) and on the other hand to the steam inlet (14a) of the steam turbine (12a) and can be supplied with thermal energy from a heat providing process of the power plant so as to produce live steam for the steam turbine (12a) from the exhaust steam of the steam turbine (12a),
wherein the steam turbine system also includes:
- a reactor (40a) with a reaction chamber (42a) for the hydrothermal carbonization of biological residues,
- energy transferring means (44a, 46a, 48a, 50a, 52a) for transferring thermal energy from the carbonization process into the water-steam circuit,
- wherein the energy transferring means (44a, 46a, 48a, 50a, 52a) comprise at the steam providing device (20a, 22a, 24a, 26a, 28a, 30a) at least one outgoing branch (44a), which is connected via a line (46a) to a heat exchanger (48a), which is provided for discharging heat from the reaction chamber (42a) of the reactor (40a) and is connected via a return line (50a) to an incoming branch (52a) at a different location of the water-steam circuit, and
- further energy transferring means (60a, 62a, 66a; 70a, 72a, 74a, 80a, 82a) for transferring thermal energy from the water-steam circuit into the reaction chamber (42a) of the reactor (40a) in order to initiate the carbonization process, wherein the further energy transferring means (60a, 62a, 66a; 70a, 72a, 74a, 80a, 82a) comprise at the steam turbine (12a), in the path between the steam inlet (14a) and the steam outlet (16a), at least one outgoing steam branch (60a; 70a, 72a) and/or at the water-steam circuit an outgoing live-steam branch, which is connected via a steam line (62a; 74a) to the reactor (40a).

2. Steam turbine system according to Claim 1, wherein the outgoing branch (44a) of the energy transferring means (44a, 46a, 48a, 50a, 52a) is provided for branching off water that has been produced by condensation of exhaust steam of the steam turbine (12a).

3. Steam turbine system according to Claim 1 or 2, wherein the incoming branch (52a) is provided for diverting in water that has been heated by the heat exchanger (48a) in the region of the steam providing device (20a, 22a, 24a, 26a, 28a, 30a).

4. Steam turbine system according to Claim 1 or 2, wherein the heat exchanger (48a) is provided for producing or heating steam that is supplied as live steam or supplementary steam to the steam turbine (12a) via the return line (50a).

5. Steam turbine system according to one of the preceding claims, wherein the further energy transferring means (60a, 62a, 66a; 70a, 72a, 74a, 80a, 82a) comprise at the water-steam circuit an outgoing live-steam branch, which is connected via a steam line to the reactor (40a).

6. Steam turbine system according to one of the preceding claims, wherein, for indirect heating of the reaction chamber (42a), a steam line (62a; 74a) or live steam line of the further energy transferring means (60a, 62a, 66a; 70a, 72a, 74a, 80a, 82a) is connected to a further heat exchanger (80a) provided for introducing heat into the reaction chamber (42a) of the reactor (40a).

7. Steam turbine system according to one of the preceding claims, wherein, for direct heating of the reaction chamber (42a), a steam line (62a; 74a) or live steam line of the further energy transferring means (60a, 62a, 66a; 70a, 72a, 74a, 80a, 82a) is connected to the reaction chamber (42a) of the reactor (40a).

8. Steam turbine system according to Claim 7, wherein a bleed line (66a), which allows a controlled removal of steam from the reaction chamber (42a), in particular into the atmosphere, is provided on the reactor (40a).

9. Steam turbine system according to one of the preceding claims, further comprising a chemotechnical device arranged upstream of the carbonization reactor (40a), for the extraction of certain constituents from the biological residues before the biological residues are supplied to the carbonization reactor (40a).

10. Method for operating a steam turbine system (10a) for a thermal power plant, in which
- by means of a steam turbine (12a) with a steam inlet (14a) for live steam and a steam outlet (16a) for exhaust steam, energy from the steam is converted into mechanical rotary power, and
- by means of a steam providing device (20a, 22a, 24a, 26a, 28a, 30a), which is arranged together with the steam turbine (12a) in a water-steam circuit, is connected on the one hand to the steam outlet (16a) of the steam turbine (12a) and on the other hand to the steam inlet (14a) of the steam turbine (12a) and can be supplied with thermal energy from a heat providing process of the power plant, live steam for the steam turbine (12a) is produced from the exhaust steam of the steam turbine (12a),
wherein, in a reaction chamber (42a) of a reactor (40a), a hydrothermal carbonization of biological residues is carried out and thermal energy is transferred from the carbonization process into the water-steam circuit, wherein the energy transfer takes place by means of an outgoing branching of water or steam provided at the steam providing device (20a, 22a, 24a, 26a, 28a, 30a) and conduction of the water or steam to a heat exchanger (48a), which is provided for discharging heat from the reaction chamber (42a) of the reactor (40a) and is connected via a return line (50a) to an incoming branch (52a) at a different location of the water-steam circuit, and wherein furthermore a further transfer of thermal energy takes place from the water-steam circuit into the reaction chamber (42a) of the reactor (40a) in order to initiate the carbonization process, wherein the further energy transfer takes place by means of an outgoing branching of steam provided at the steam turbine (12a) in the path between the steam inlet (14a) and the steam outlet (16a) and/or outgoing branching of live steam at the water-steam circuit, and conduction of the branched-off steam or live steam to the reactor.

11. Method according to Claim 10, in which certain constituents are extracted from the biological residues before the biological residues are subjected to the carbonization.

## Revendications

1. Installation de turbine à vapeur pour une centrale thermique, avec
- une turbine à vapeur (12a) avec une admission de vapeur (14a) pour de la vapeur vive et une évacuation de vapeur (16a) pour de la vapeur d'échappement, en vue de la conversion de l'énergie de la vapeur en puissance de rotation, et
- un dispositif de mise à disposition de vapeur (20a, 22a, 24a, 26a, 28a, 30a) disposé conjointement avec la turbine à vapeur (12a) dans un circuit eau-vapeur et relié d'un côté à l'évacuation de vapeur (16a) de la turbine à vapeur (12a) et d'un autre côté à l'admission de vapeur (14a) de la turbine à vapeur (12a), lequel dispositif peut être alimenté en énergie thermique à partir d'un processus de mise à disposition de chaleur pour la centrale, pour générer de la vapeur vive pour la turbine à vapeur (12a) à partir de la vapeur d'échappement de la turbine (12a),
dans laquelle l'installation de turbine à vapeur contient en outre :
- un réacteur (40a) avec un espace de réaction (42a) en vue de la carbonisation hydrothermale de résidus biologiques,
- des moyens de transfert d'énergie (44a, 46a, 48a, 50a, 52a) en vue du transfert de l'énergie thermique issue du processus de carbonisation dans le circuit eau-vapeur,
les moyens de transfert d'énergie (44a, 46a, 48a, 50a, 52a) comprenant au niveau du dispositif de mise à disposition de vapeur (20a, 22a, 24a, 26a, 28a, 30a) au moins une bifurcation (44a) qui est reliée via une conduite (46a) à un échangeur de chaleur (48a) prévu pour l'évacuation de chaleur à partir de l'espace de réaction (42a) du réacteur (40a), lequel échangeur est relié via une conduite de retour (50a) à une ramification (52a) au niveau d'un autre point du circuit eau-vapeur, et
- d'autres moyens de transfert d'énergie (60a, 62a, 66a ; 70a, 72a, 74a, 80a, 82a) en vue du transfert de l'énergie thermique issue du circuit eau-vapeur dans l'espace de réaction (42a) du réacteur (40a), pour initier le processus de carbonisation, les autres moyens de transfert d'énergie (60a, 62a, 66a ; 70a, 72a, 74a, 80a, 82a) comprenant au niveau de la turbine à vapeur (12a) dans le parcours entre l'admission de vapeur (14a) et l'évacuation de vapeur (16a) au moins une bifurcation de vapeur (60a ; 70a, 72a) et/ou une bifurcation de vapeur vive au niveau du circuit eau-vapeur, qui est reliée au réacteur (40a) via une conduite de vapeur (62a ; 74a).

2. Installation de turbine à vapeur selon la revendication 1, dans laquelle la bifurcation (44a) des moyens de transfert d'énergie (44a, 46a, 48a, 50a, 52a) est prévue pour la bifurcation de l'eau qui a été générée par la condensation de la vapeur d'évacuation de la turbine à vapeur (12a).

3. Installation de turbine à vapeur selon la revendication 1 ou 2, dans laquelle la ramification (52a) est prévue pour la ramification de l'eau dans la zone du dispositif de mise à disposition de vapeur (20a, 22a, 24a, 26a, 28a, 30a) qui a été chauffée par le biais de l'échangeur de chaleur (48a).

4. Installation de turbine à vapeur selon la revendication 1 ou 2, dans laquelle l'échangeur de chaleur (48a) est prévu pour la génération ou le réchauffement de la vapeur qui est amenée via la conduite de retour (50a) en tant que vapeur vive ou vapeur d'amenée à la turbine à vapeur (12a).

5. Installation de turbine à vapeur selon l'une des revendications précédentes, dans laquelle les autres moyens de transfert d'énergie (60a, 62a, 66a ; 70a, 72a, 74a, 80a, 82a) comprennent au niveau du circuit eau-vapeur une bifurcation de vapeur vive qui est reliée au réacteur (40a) via une conduite de vapeur.

6. Installation de turbine à vapeur selon l'une des revendications précédentes, dans laquelle une conduite de vapeur (62a ; 74a) resp. une conduite de vapeur vive des autres moyens de transfert d'énergie (60a, 62a, 66a ; 70a, 72a, 74a, 80a, 82a) pour un chauffage indirect de l'espace de réaction (42a) est reliée à un autre échangeur de chaleur (80a) prévu pour une introduction de chaleur dans l'espace de réaction (42a) du réacteur (40a).

7. Installation de turbine à vapeur selon l'une des revendications précédentes, dans laquelle une conduite de vapeur (62a ; 74a) resp. une conduite de vapeur vive des autres moyens de transfert d'énergie (60a, 62a, 66a ; 70a, 72a, 74a, 80a, 82a) est reliée à l'espace de réaction (42a) du réacteur (70a) pour un chauffage direct de l'espace de réaction (42a).

8. Installation de turbine à vapeur selon la revendication 7, dans laquelle au niveau du réacteur (40a) est prévue une conduite d'évacuation (66a) qui permet une évacuation commandée de la vapeur hors de l'espace de réaction (42a) vers l'extérieur, en particulier dans l'atmosphère.

9. Installation de turbine à vapeur selon l'une des revendications précédentes, comprenant en outre un dispositif de génie chimique monté en amont du réacteur de carbonisation (40a) en vue de l'extraction de certains composants issus des résidus biologiques avant que les résidus biologiques soient amenés au réacteur de carbonisation (40a).

10. Procédé destiné à l'exploitation d'une installation de turbine à vapeur (10a) pour une centrale thermique, dans lequel
- au moyen d'une turbine à vapeur (12a) avec une admission de vapeur (14a) pour la vapeur vive et d'une évacuation de vapeur (16a) pour la vapeur d'échappement l'énergie de la vapeur est convertie en puissance de rotation mécanique, et
- au moyen d'un dispositif de mise à disposition de vapeur (20a, 22a, 24a, 26a, 28a, 30a) disposé conjointement avec la turbine à vapeur (12a) dans un circuit eau-vapeur et relié d'un côté à l'évacuation de vapeur (16a) de la turbine à vapeur (12a) et d'un autre côté à l'admission de vapeur (14a) de la turbine à vapeur (12a), lequel dispositif peut être alimenté en énergie thermique issue d'un processus de mise à disposition de chaleur pour la centrale, de la vapeur vive pour la turbine à vapeur (12a) est générée à partir de la vapeur d'échappement de la turbine à vapeur (12a),
dans lequel dans un espace de réaction (42a) d'un réacteur (40a) une carbonisation hydrothermale de résidus biologiques est réalisée et l'énergie thermique issue du processus de carbonisation est transférée dans le circuit eau-vapeur, le transfert d'énergie s'effectuant au moyen d'une bifurcation d'eau ou de vapeur prévue au niveau du dispositif de mise à disposition de chaleur (20a, 22a, 24a, 26a, 28a, 30a) et d'une conduite de l'eau resp. de la vapeur vers un échangeur de chaleur (48a) prévu pour l'évacuation de chaleur hors de l'espace de réaction (42a) du réacteur (40a), lequel échangeur est relié via une conduite de retour (50a) à une ramification (52a) au niveau d'un autre point du circuit eau-vapeur, et en outre un autre transfert d'énergie thermique s'effectuant du circuit eau-vapeur à l'espace de réaction (42a) du réacteur (40a) pour initier le processus de carbonisation, l'autre transfert d'énergie s'effectuant au moyen d'une bifurcation de vapeur prévue au niveau de la turbine à vapeur (12a) dans le parcours entre l'admission de vapeur (14a) et l'évacuation de vapeur (16a) et/ou d'une bifurcation de vapeur vive au niveau du circuit eau-vapeur, et d'une conduite de la vapeur resp. de la vapeur vive bifurquée vers le réacteur.

11. Procédé selon la revendication 10, dans lequel certains composants sont retirés des résidus biologiques avant que les résidus biologiques soient soumis à la carbonisation.
